# EUROPÄISCHE PATENTSCHRIFT

(11) **EP 0 301 476 B1**
(45) Veröffentlichungstag und Bekanntmachung des Hinweises auf die Patenterteilung: **31.03.1993**
(21) Anmeldenummer: 88112036.4
(22) Anmeldetag: 26.07.1988
(51) Int. Cl.: B65G 47/61

(54) **Verfahren und Vorrichtung zur automatischen Übergabe von Bekleidungsstücken an Faltautomaten sowie Bügel**
Method and device for automatically transferring garments to folding devices and hangers
Méthode et dispositif pour le transfert automatique de vêtements à un dispositif de pliage et porte-manteau

(30) Priorität: 31.07.1987 DE 3725523
(43) Veröffentlichungstag der Anmeldung: 01.02.1989
(73) Patentinhaber: KD Kleindienst Wäscherei- und Desinfektionstechnik GmbH, 86199 Augsburg (DE)
(72) Erfinder: Zesch, Winfred, D-8901 Zusmarshausen (DE); Ortolf, Heribert, D-8901 Stadtbergen (DE)
(74) Vertreter: Ernicke, Hans-Dieter, Dipl.-Ing.

(56) Entgegenhaltungen:
- FR-A- 1 509 014
- FR-A- 2 142 980
- GB-A- 1 314 168
- GB-A- 2 117 810
- US-A- 2 728 499
- US-A- 2 782 969
- US-A- 3 799 318
- US-A- 4 227 632

## Beschreibung

Die Erfindung betrifft ein Verfahren zur automatischen Übergabe von Bekleidungsstücken an Faltautomaten mit der dazugehörigen Vorrichtung, sowie einen Transportbügel mit den Merkmalen in den Oberbegriffen der Vorrichtungs- und Verfahrenshauptansprüche.

Aus der GB-PS 1 314 168 sind eine derartige Übergabevorrichtung und ein solcher Transportbügel bekannt. Die an Transportbügeln hängenden Bekleidungsstücke werden mittels Haken entlang einer horizontalen Förderstrecke bewegt und auf die schräge Arbeitsfläche des Faltautomaten gelegt. Die Bekleidungsstücke werden durch Saugdruck auf der Arbeitsfläche festgehalten, während die Transportbügel in horizontaler Richtung weiterbewegt und dabei aus den Bekleidungsstücken herausgezogen werden. Dies hat den Nachteil, daß die Transportbügel bei dieser Bewegung abgekantet werden, was ihre Funktionstüchtigkeit beeinträchtigt und außerdem zu unerwünschten Falten am Bekleidungsstück führt. Die verwendeten Transportbügel besitzen dabei den weiteren Nachteil, daß sie mechanisch labil sind und eine komplizierte Sperrvorrichtung aufweisen. Damit lassen sich die Bügelarme nur mit hohem Aufwand abklappen und für eine Neubeschickung wieder aufrichten.

Es ist daher Aufgabe der vorliegenden Erfindung, ein Verfahren und eine Vorrichtung zur automatischen Übergabe von Bekleidungsstücken an Faltautomaten zu schaffen, die bei geringerem konstruktiven Aufwand eine größere Betriebssicherheit aufweisen und eine faltenfreie Ablage des Bekleidungsstückes auf dem Faltautomaten gestatten.

Die Erfindung löst diese Aufgabe mit den kennzeichnenden Merkmalen im Verfahrens- und Vorrichtungshauptanspruch.

Mit der erfindungsgemäßen Ausziehbewegung des Transportbügels in Richtung der Arbeitsflächenneigung wird ein Abkanten des Bügels verhindert. Die Einklappbewegung der Bügelarme und die Ausziehbewegung verlaufen in der gleichen Ebene, so daß der Bügel ohne Faltenwurf und Beschädigung am Bekleidungsstück herausgezogen werden kann. Der Transportbügel ist damit auch in geringerem Maße mechanisch belastet.

Die erfindungsgemäße Übergabevorrichtung weist in ihrer Fördervorrichtung hierzu eine von der normalen Transportrichtung abweichende Steigstrecke auf, die so angeordnet ist, daß der Bügel erst mit dem Bekleidungsstück plan auf die Arbeitsfläche des Faltautomaten aufgelegt und dann in deren Richtung abgezogen werden kann.

Die erfindungsgemäße Fördervorrichtung kann integrierter Bestandteil einer übergeordneten Förderstrecke sein, mit der verschiedene Behandlungsstationen untereinander verbunden sind. Die Erfindung bevorzugt jedoch eine eigenständige, dem einzelnen Faltautomaten zugeordnete Fördervorrichtung. Diese kann für einen höheren Automatisierungsgrad an externe Förderstrecken für die beund entladenen Transportbügel angeschlossen sein. Es ist aber auch möglich, die Transportbügel mit den Wäschestücken von Hand an die Fördervorrichtung aufzugeben, die dann für eine automatisch lagegerechte Zuführung der Bekleidungsstücke sorgt. Die erfindungsgemäße Selbständigkeit der Fördervorrichtung hat den Vorteil, daß mehrere Faltautomaten an eine übergeordnete Förderstrecke über Weichen und dergleichen angeschlossen sein können. Außerdem läßt sich die Steigstrecke leichter realisieren und der Faltautomat vom Arbeitstakt der übrigen Maschinen in einer automatisierten Wäschereianlage entkoppeln.

Die Fördervorrichtung ist als vorzugsweise im Dreieck umlaufender Kettentrieb mit mehreren Mitnehmern für die Transportbügel ausgebildet. Hierdurch können gleichzeitig beladene Transportbügel eingangsseitig übernommen, im mittleren Bereich die Bekleidungsstücke faltgerecht abgelegt und die leeren Transportbügel ausgangsseitig wieder abgeführt werden. Die Steuerung erfolgt dabei über mehrere berührungslose Sensoren, die die Stellung und Bewegung der Mitnehmer registrieren und melden.

Die erfindungsgemäße Übergabevorrichtung beinhaltet auch eine Saugvorrichtung zum Festhalten des Bekleidungsstückes auf der Arbeitsfläche zum Ausziehen des Bügels und zum anschließenden Längsfalten. Im Gegensatz zur GB-PS 1 314 168 ist die erfindungsgemäße Saugvorrichtung jedoch in ihrer Druckhöhe steuerbar. Zum Ausziehen des Bügels wird ein niedrigerer Saugdruck eingestellt als bei der Längsfaltung. Der niedrige Saugdruck hält das Bekleidungsstück vor allem an seiner Unterseite fest und verhindert ein Verrutschen beim Ausziehen des Bügels. Die Oberseite des Bekleidungsstückes wird durch den niedrigen Saugdruck jedoch mit nur geringer Kraft festgehalten. Der Bügel kann damit ohne Behinderung zwischen den Kleidungsstückseiten einklappen und führt auch nicht zu einem Verzug des Bekleidungsstückes. Für die nachfolgende Längsfaltung wird der Saugdruck dann erhöht, um auch die Oberseite des Bekleidungsstückes festzuhalten und die Längsfaltung zu sichern. Nach Zurückklappen der Faltblätter neigt die Kleidungsstückoberseite sonst zum Aufspringen und Entfalten.

In den Unteransprüchen sind vorteilhafte Ausgestaltungen des Transportbügels angegeben. Der bevorzugte Transportbügel besitzt im Gegensatz zu demjenigen aus der GB-PS 1 314 168 Bügelarme mit nur zwei Schwenklagern. Die Bügelarme sind als Spreizfedern ausgebildet und weisen hierzu geschlossene Bügelspitzen auf. Der Federeffekt bewirkt, daß beim Bügelabzug das Gehäuse mitbewegt wird, wodurch sich die Gehäusebewegung und die Abschwenkbewegung der Bügelarme so miteinander überlagern, daß der Bügel ohne Falten aus dem Bekleidungsstück schlüpft. Beim Stand der Technik werden hingegen ohne diese Bewegungsüberlagerung erst einmal die Bügelarme abgeklappt, und dann erst der Bügel aus dem Bekleidungsstück herausgezogen. Die Abklappbewegung bewirkt jedoch bereits einen Verzug und eine Faltenbildung am Bekleidungsstück.

Der Federeffekt bewirkt im weiteren auch eine Stabilisierung des beladenen Transportbügels und gestattet eine selbsttätige Entfaltung. Letzteres verringert den Aufwand für eine Vollautomatisierung der gesamten Wäschereianlage.

Der bevorzugte Transportbügel zeigt seine Vorteile vor allem im Zusammenwirken mit der Übergabevorrichtung und dem Verfahren gemäß der Erfindung. In der Kombination ergibt sich eine optimale Lösung der Aufgabe. Der Transportbügel kann mit Erfolg aber auch in Verbindung mit anderen, beispielsweise der vorbekannten Übergabevorrichtung eingesetzt werden. Desgleichen kann die erfindungsgemäße Übergabevorrichtung auch mit anderen Transportbügeln zusammenwirken.

Durch die besondere Anordnung der Lager der Bügelarme ergibt sich eine Totpunktstellung, nach deren Überschreiten die abgeschwenkten Bügelarme in ihrer Lage fixiert sind. Zum Aufspannen bedarf es nur einer kleinen Einschubbewegung des Bügelhakens mit der Kulisse, wodurch die Totpunktstellung überschritten wird und die Bügelarme selbsttätig aufklappen.

Der Transportbügel mit den federnden Bügelarmen stabilisiert sich in der aufgeklappten Stellung selbst und bedarf von daher eigentlich keiner Verriegelung. In modernen Tunnel-Finishern können die Anströmgeschwindigkeiten der Luft jedoch sehr hoch sein, so daß bei langen Mänteln erhebliche Zugkräfte auf die Bügelarme einwirken. Um hier auch auf die Dauer eine absolut sichere Aufspannung der Bügelarme zu schaffen, kann zusätzlich eine Verriegelung in Form einer Sperrnase am federnden freien Ende des gebogenen Bügelhakenunterteiles vorgesehen sein. Im Gegensatz zur GB-PS 1 314 168, die einen komplizierten Schwenkmechanismus zeigt, wird die erfindungsgemäße Sperrnase mit einer einfachen Ausweichbewegung des freien Unterteilendes gelöst. Dies geschieht automatisch beim Herausziehen des Transportbügels, wobei das freie Ende mit einer Angleitschräge gegen einen kurzzeitig vorragenden Entriegelungsbolzen bewegt und ausgelenkt wird.

Bei der erfindungsgemäßen Übergabevorrichtung sollen die Bügel wieder sicher ausgangsseitig an eine anschließende Förderstrecke abgegeben werden. Dies kann geschehen, indem man den Bügel vom Schlepphaken in eine geeignete Position auf die anschließende Förderstrecke abrutschen läßt. In der Praxis hat sich gezeigt, daß dies jedoch nicht ausreichend betriebssicher ist. Die Bügel können hängenbleiben, oder sogar bei der Übergabe herunterfallen. Problematisch ist auch der Umstand, daß durch diese Übergabe die Umlaufgeschwindigkeit der Schlepphaken begrenzt ist, was sich in der Taktzeit des Faltautomaten niederschlägt.

In diesem Zusammenhang hat sich auch eine geometrisch einfache Form der Schlepphaken als ungünstig erwiesen, da die Übernahme und Abgabe der Bügel von und an die anschließenden Förderstrecken nicht mit Sicherheit funktioniert. Außerdem kann es bei einem Einklappen der Bügelarme zu einer sprungartigen Aufwärtsbewegung des Bügels kommen, wobei dieser außer Eingriff mit dem Schlepphaken gerät.

Kritisch ist auch der Umstand, daß die zu faltenden Wäschestücke, insbesondere Hemden und Kittel, in einer Behandlungsstraße an der Anlegestation mit der Knopfleiste nach oben, d.h. zur Bedienungsperson gewandt, angelegt werden. Diese Ausrichtung behalten die Kleidungsstücke während ihres Durchlaufes durch die verschiedenen Behandlungsstationen, wie Finisher und dgl., bei. Am Faltautomaten müssen die Kleidungsstücke jedoch in umgedrehter Lage, d. h. mit der Knopfleiste zur Arbeitsfläche des Faltautomaten zugeführt werden. Problematisch ist auch die Übergabe der Bügel mit den Kleidungsstücken von der ankommenden Förderstrecke auf die Übergabevorrichtung am Faltautomaten. Hier kann es zu Betriebsstörungen durch herabfallende Bügel und Kleidungsstücke kommen.

Die Hauptaufgabe hat daher den zusätzlichen Aspekt, auch die Betriebssicherheit der Transportvorrichtungen zu verbessern, und insbesondere eine sichere Übergabe der Bügel zu gewährleisten.

Zur Lösung dieser Aufgabe wird zum einen vorgeschlagen, für die Übergabe der leeren Bügel im Bereich der schrägen Steigstrecke der Fördervorrichtung eine Abbügelvorrichtung vorzusehen, die in einer aktiven und definierten Bewegung die Bügel vom Schlepphaken entfernt und sicher auf die anschließende Förderstrecke gleiten läßt. Die erfindungsgemäße Vorrichtung läßt sich mit Erfolg auch an anderen Wäschereimaschinen und anderen sonstigen Übergabestellen im Transportsystem einer Wäscherei einsetzen.

Die Abbügelvorrichtung besitzt einen Anschlagblock, der den abgehobenen Bügel am Ende der Bewegung in eine definierte Lage bringt und dort zentriert, so daß der Bügel mit Sicherheit auf die anschließende Förderstrecke gleitet. Es empfiehlt sich hierbei, den Anschlagblock am Ende der Steigstrecke anzuordnen, da hier die Umkehrbewegung des Schlepphakens ausgenutzt werden kann.

Der Schubantrieb hebt den Bügel vom Schlepphaken ab und führt ihn durch seine schräge Lage und sein Leitblech zwangsweise an den Anschlagblock. In Verbindung mit der erfindungsgemäßen Übergabevorrichtung und den einklappbaren Bügeln kann bei einem entsprechend großen Hub des Schubantriebes während des Abhebens zugleich der Bügel wieder gespreizt werden. Daneben ist die erfindungsgemäße Vorrichtung aber auch für beliebige andere Bügelformen und damit auch für starre Bügel geeignet, für die der Hub entsprechend kürzer ist.

Um den Transport der Bügel in der Übergabevorrichtung am Faltautomaten oder einer anderen Wäschereimaschine sicherzustellen und auch die Funktion der Abbügelvorrichtung zu erleichtern, besitzen die Schlepphaken eine spiralförmige Gestalt und sind drehschlüssig mit den Gliedern der Fördervorrichtung verbunden. Hierdurch dreht sich der Schlepphaken an den funktionswichtigen Positionen, wie den Aufnahme- und Übergabestellen zu den anschließenden Förderstrecken und zu Beginn der Steigstrecke, in der der Bügel eingeklappt und aus dem faltbereiten Kleidungsstück gezogen wird. Durch die Drehbewegung in Verbindung mit der besonderen Gestaltung ist sichergestellt, daß der Bügel an den Aufnahme- und Übergabestellen sicher auf den Schlepphaken gleitet, bzw. von diesem wieder freigegeben wird. Am Beginn der Gleitstrecke hingegen wird der Eingriff mit dem Bügel gesichert, auch wenn der Bügel beim Einklappen seiner Arme eine sprungartige Aufwärtsbewegung macht. Auf den horizontalen und schrägen (Steigstrecke) Transportstrecken wird ebenfalls der Eingriff gesichert, so daß der Bügel auch durch Schaukelbewegungen oder sonstige Fremdeinflüsse nicht vom Schlepphaken rutschen kann. Zu diesem Zweck besitzt der Schlepphaken ein Auge mit einer engen Zugangsöffnung, die nur in bestimmten Drehstellungen des Schlepphakens den darin eingehängten Bügel freigibt. Der vorstehende Haltearm bietet für die Aufnahme und Übergabe der Bügel eine definierte Gleitfläche, die dem Bügel in die gewünschte Position leitet. Um ein unbeabsichtigtes Abgleiten des Bügels an der Übergabeposition zu verhindern, besitzt der Haltearm außerdem eine Sicherungsnase. Diese bietet auch eine zusätzliche Sicherheit gegen Herabfallen des Bügels, falls dieser durch extreme äußere Einflüsse auf den Transportstrecken doch einmal aus dem Auge schlüpfen sollte.

Die Gestaltung des Schlepphakens ist für die Fördervorrichtung an der erfindungsgemäßen Übergabevorrichtung von besonderem Vorteil. Sie bietet sich aber auch zur Verwendung an anderen Fördervorrichtungen im Bereich einer Wäscherei, beispielsweise auch an anderen Behandlungsstationen, Faltautomaten nach dem Stand der Technik oder dgl. an.

Um eingangsseitig die Übergabe der Bügel mit den Kleidungsstücken von der vorgeschalteten Förderstrecke auf die maschineninterne Fördervorrichtung zu sichern, ist ein Bügelumsetzer in Gestalt eines mehrarmigen angetriebenen Drehkreuzes angeordnet. Dieser erlaubt zugleich auch die Drehung der Kleidungsstücke, so daß die Knopfleiste zur Auflagefläche des Faltautomaten zeigt. Der erfindungsgemäße Bügelumsetzer kann in diesem Sinne auch an anderer Stelle im Fördersystem einer Wäscherei nutzbringend eingesetzt werden.

Zur Erhöhung der Betriebssicherheit ist das Drehkreuz mit seinen Armen schräg zur Fördervorrichtung und zur vorgeschalteten Förderstrecke ausgerichtet. Durch die Schräglage wird einerseits das Aufgleiten von der Förderstrecke auf das Drehkreuz gesichert, während nach erfolgter Umdrehung der Bügel schräg zur Fördervorrichtung abgleiten kann. Die Auf- und Abgleitbewegungen von den umlaufenden und damit in Bewegung befindlichen Fördereinrichtungen wird durch Leitorgane zusätzlich gesichert. Zum gleichen Zweck sind auch die Arme des Drehkreuzes im Durchmesser abgestuft, wobei der größere Durchmesser ein unbeabsichtigtes Drehen oder Pendeln der Bügel verhindert, während der dünnere stangenförmige Fortsatz das Aufgleiten des Bügels erleichtert und etwaige Lücken zwischen dem Arm des Drehkreuzes und der Fördervorrichtung bzw. einer zwischengeschalteten Zuführstange abdeckt. Die Zuführstange hat außer ihrer Leitfunktion auch eine Pufferfunktion. Der Bügelumsetzer weist auch Sensoren auf, um den Bügeltransport zu überwachen und die verschiedenen Fördereinrichtungen im Takt untereinander und auf den Faltautomaten abzustimmen.

Die Erfindung ist in den Zeichnungen beispielsweise und schematisch dargestellt. Im einzelnen zeigen:
- Fig. 1 und 2:: eine Front- und Seitenansicht eines Faltautomaten mit einer Übergabevorrichtung,
- Fig. 3 und 4:: eine Front- und eine Draufsicht auf einen Transportbügel mit aufgeklappten Bügelarmen,
- Fig. 5:: eine Frontansicht eines Transportbügels mit abgeklappten Bügelarmen,
- Fig. 6 und 7:: eine Abbügelvorrichtung mit Schlepphaken in Seiten- und Stirnansicht und
- Fig. 8 und 9:: einen Bügelumsetzer in zwei Seitenansichten.

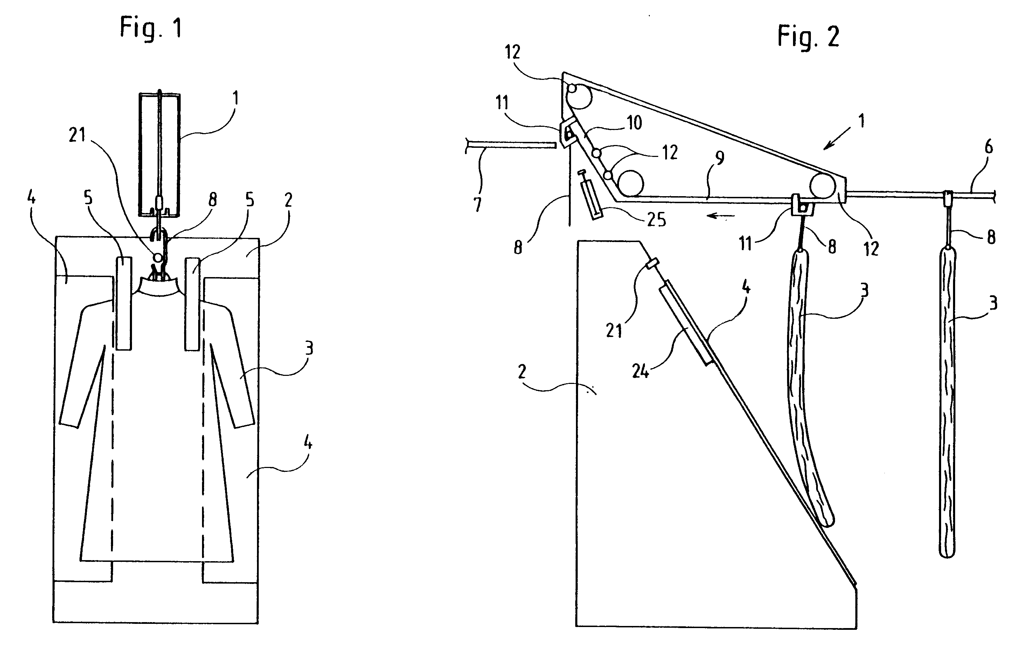

Fig. 1 und 2 zeigen einen Faltautomaten (2) mit einer schrägen, durch Faltklappen gebildeten Arbeitsfläche (4). Dem Faltautomaten (2) ist eine Übergabevorrichtung (1) zugeordnet, die eingangsseitig an eine Förderstrecke (6) angeschlossen ist, auf der an Transportbügeln (8) hängende Bekleidungsstücke (3) in Form von Kitteln, Mänteln oder dergleichen zugeführt werden.

Rückseitig ist an die Übergabevorrichtung (1) eine weitere, ebenfalls vorzugsweise horizontale Förderstrecke (7) angeschlossen, an die die leeren Transportbügel (8) zum Abtransport übergeben werden.

In Fig. 1 ist das Bekleidungsstück (3) auf die Arbeitsfläche (4) gerade plan abgelegt worden und wird durch beiderseits des Kragens abklappbare Niederhalter (5) festgehalten. In dieser Stellung wird der Transportbügel (8) eingeklappt und zugleich abgezogen. Sobald die Bügelarme innerhalb des Längsfaltformates liegen, werden noch während der Auszugsbewegung die Faltklappen (4) betätigt.

In Fig. 2 ist eine Variante zum vorbeschriebenen Ausführungsbeispiel angedeutet.
Die Übergabevorrichtung (1) kann danach auch eine Vakuumvorrichtung (24) beinhalten, die unter der Arbeitsfläche (4) angeordnet ist. Die Vakuumvorrichtung (24) kann sich nur über den oberen Kittelbereich oder über dessen ganze Länge erstrecken. Sie ist in Abhängigkeit von der Bügelbewegung und damit auch von der nachfolgend geschilderten Fördervorrichtung (9) in der Stärke des Saugdruckes steuerbar. Mit Auflegen des Bekleidungsstückes (3) auf der Arbeitsfläche (4) wird die Vakuumvorrichtung (24) eingeschaltet und entwickelt nur einen relativ niedrigen Saugdruck, bei dem vor allem die Bekleidungsstückunterseite gegen Verrutschen gesichert wird. Auf die Bekleidungsstückoberseite wird jedoch nur eine geringe Saugkraft ausgeübt, so daß die beiden Seiten nicht aneinander haften und der Einklappbewegung des Transportbügels (8) keinen nennenswerten Widerstand entgegensetzen.

In dieser Ausführungsform fungieren die Niederhalter (5) in erster Linie als Formschablone zur Bildung einer definierten Seitenkante für die Längsfaltung. Sie werden dementsprechend auch erst abgeklappt wenn der Transportbügel (8) aus dem Bekleidungsstück (3) abgezogen ist.
Mit dem Abklappen der Formschablone (5) wird die Vakuumvorrichtung (24) auf vollen Saugdruck geschaltet, der beide Kleidungsstückseiten auf der Arbeitsfläche (4) festhält. Zur Unterstützung der Saugwirkung kann die Formschablone gelocht sein. Die beim anschließenden Längsfaltvorgang aufgelegten Ärmel und Seitenteile werden durch den hohen Saugdruck ebenfalls festgehalten und in ihrer Faltlage auch nach dem Rückklappen der Längsfaltblätter festgehalten. Zuletzt erfolgt noch der Querfaltvorgang und der Abtransport des gefalteten Bekleidungsstückes.

Nachfolgend wird die Funktion der erfindungsgemäßen Übergabevorrichtung (1) näher geschildert:
Zum Herausziehen wird der Transportbügel (8) in der Richtung und in Verlängerung der geneigten Arbeitsfläche (4) bewegt. Die Übergabevorrichtung beinhaltet dazu eine Fördervorrichtung (9) in Gestalt eines im Dreieck umlaufenden endlosen Kettentriebes. Am Kettentrieb (9) sind mit Abstand mehrere Mitnehmer oder Schlepphaken (11) für die Transportbügel (8) befestigt. Der Kettentrieb (9) besitzt im vorderen Bereich einen im wesentlich horizontal sich erstreckenden Abschnitt, an den sich eine Steigstrecke (10) anschließt, von der eine Rückführung wieder zur Eingangsseite schräg abwärts führt. Die Steigstrecke (10) erstreckt sich oberhalb und parallel zur geneigten Arbeitsfläche (4) Wird der Schlepphaken (11) entlang dieser Steigstrecke (10) bewegt, wird der Transportbügel (8) in der vorbeschriebenen Weise aus dem Bekleidungsstück herausgezogen.

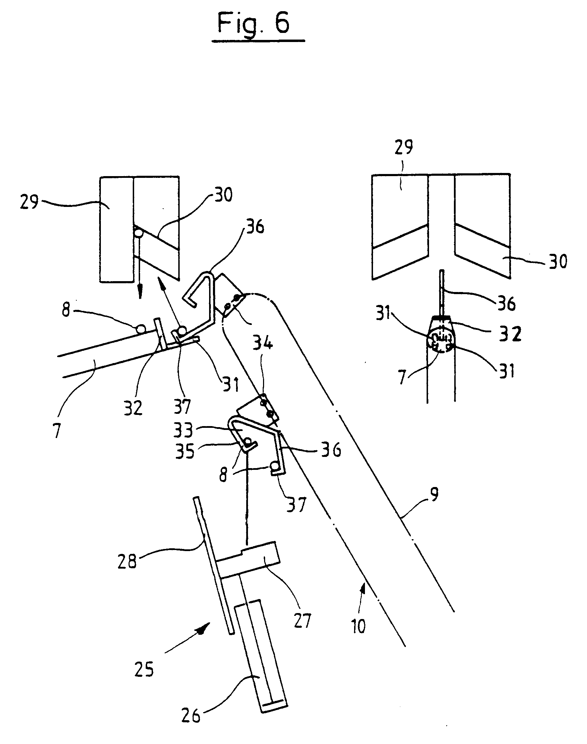

Die Schlepphaken (11) sind entgegen der Umlaufrichtung offen und besitzen ein kurzes abgeschrägtes Hakenende. An der Übernahmestelle zu der beispielsweise als Schnecke ausgebildeten Förderstrecke (6) sind die Schlepphaken (11) nach oben offen, so daß die Transportbügel (8) leicht eingehängt werden können. Am Ende der Steigstrecke (10) öffnen hingegen die Schlepphaken (11) beim Überfahren der Umlenkrolle selbsttätig und klinken den Transportbügel (8) in die Förderstrecke (7) oder eine Lagerstange aus. Eine andere spezielle Ausführungsform der Schlepphaken (11) ist weiter unten mit Bezugnahme auf Fig. 6 beschrieben.

Am Kettentrieb (9) sind mehrere Schlepphaken (11) mit gleichen Abständen angeordnet. Im Gehäuse der Übergabevorrichtung (1) sind vor der eingangsseitigen Umlenkrolle und oberhalb der ausgangsseitigen Umlenkrolle jeweils ein Sensor, vorzugsweise in Form von berührungslosen optischen, kapazitiven oder induktiven Tastern angeordnet. In der Steigstrecke (10) sind oberhalb der mittleren Umlenkrolle zwei Sensoren (12) angeordnet, die die Schaltpositionen für das Auflegen des Bekleidungsstückes (3) mit dem Abklappen der Niederhalter (5) und für die Entriegelung des Transportbügels (8) darstellen. Die Sensoren (12) sind auf die Schlepphaken (11) ausgerichtet und melden deren Position an die Steuerung des Faltautomaten (2) und der Übergabevorrichtung (1).

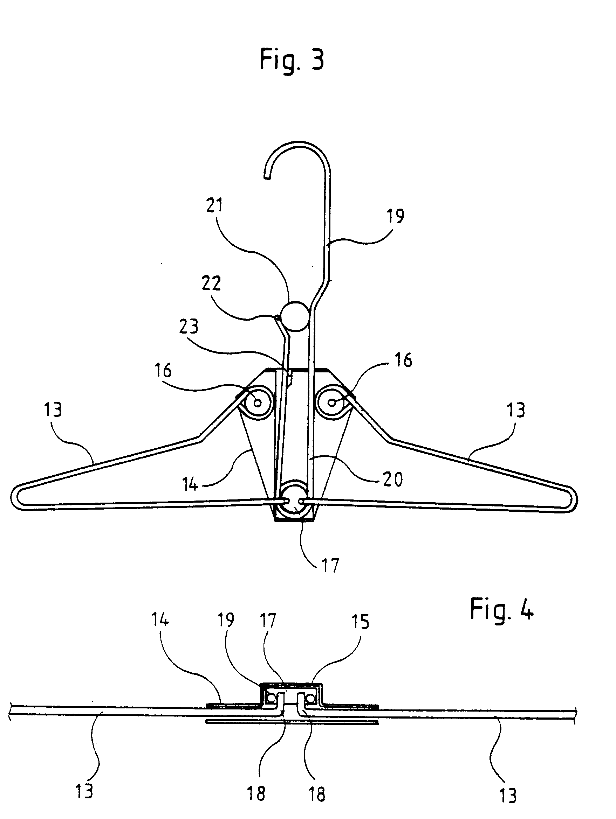

In den Figuren 3 bis 5 ist der nachfolgend näher beschriebene Transportbügel (8) dargestellt.

Er besitzt zwei Bügelarme (13), die im wesentlichen V-förmig aus Federstahldraht gebogen sind. Sie weisen geschlossene Bügelspitzen auf und sind als Spreizfedern ausgebildet. Am oberen Ende sind die Bügelarme (13) in Drehlagern (16) am Gehäuse (14) schwenkbar befestigt. Am unteren Ende sind die Bügelarme (13) über kurze abgebogene Fortsätze (18) in einer scheibenförmigen Kulisse (17)schwenkbar gelagert. Die Kulisse (17) wird ihrerseits vom U-förmig gebogenen Unterteil (20) des Bügelhakens (19) umgriffen und ist mit diesem in einem am Gehäuse (14) ausgeprägten Führungskanal (15) vertikal beweglich geführt. Das Gehäuse (14) ist doppelwandig ausgebildet und umgibt damit unter Sicherung der gegenseitigen Lage die Enden der Bügelarme (13), die Kulisse (17) und das Unterteil (20).

Fig. 3 zeigt den Transportbügel (8) in aufgeklappter Stellung. Die Bügelarme (13) besitzen eine aufspreizende Federwirkung und drücken dadurch die Kulisse (17) gegen den Boden des Führungskanales (15) Die Lage wird zusätzlich gesichert durch eine nach innen vorspringende Sperrnase (23) am freien Ende des Unterteiles (20). Diese legt sich von unten gegen einen in den Führungskanal (15) vorspringenden Ansatz am Gehäuse (14) und verhindert ein Herausziehen des Bügelhakens (19) aus dem Gehäuse (14).

Die Sperrstellung kann gelöst werden durch einen am Faltautomaten (2) (vgl. Fig. 2) in der Arbeitsfläche (4) befindlichen Bolzen (21), der bei aufgelegtem Transportbügel (8) zwischen die Enden des Unterteiles (20) zu liegen kommt. Zum Herausziehen des Transportbügels (8) wird der Bolzen (21) kurzzeitig vorgeschoben, wodurch das Unterteil (20) mit einer Angleitschräge (22) an seinem Ende anstößt. Hierdurch wird das federnde freie Ende des Unterteiles (20) abgelenkt und die Sperrnase (23) freigegeben. Bei der Aufwärtsbewegung des Bügelhakens (19) entlang der Steigstrecke (10) wird das Gehäuse (14) durch die Federkraft der Bügelarme (13) mitbewegt. Zugleich setzt das festgehaltene Kleidungsstück einer Aufwärtsbewegung der oberen Enden der Bügelarme (13) Widerstand entgegen mit der Folge, daß der Bügelhaken (19) mit der Kulissenscheibe (17) relativ zum Gehäuse nach oben bewegt wird, wodurch die Bügelarme (13) unter Annäherung ihrer Enden abwärtsschwenken. Beim Herausziehen des Bügels (8) überlagern sich hierbei die Aufwärtsbewegung des Gehäuses (14) und die Einklappbewegung der Bügelarme (13).

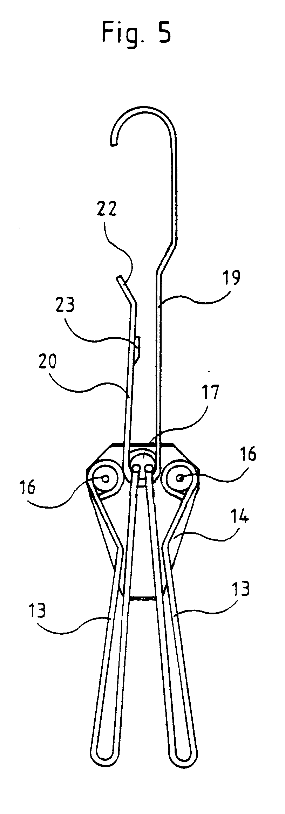

Fig. 5 zeigt die Ruhestellung des Bügels (8), die er nach Verlassen des Kragens einnimmt. Die Kulissenscheibe (17) ist mit den Enden der Bügelarme (13) in eine Stellung oberhalb der wirksamen Achse der Lager (16) bewegt worden. Hierbei wurde eine Totpunktstellung überschritten, so daß die abgeschwenkte Lage der Bügelarme (13) unter ihrer Federkraft gesichert ist.

Zum Öffnen des Transportbügels (8) wird an einer Auflaufschräge oder der nachfolgend in Fig. 6 beschriebenen Aufstellvorrichtung (25) das Gehäuse (14) gegenüber dem Bügelhaken (19) angenähert. Die Kulissenscheibe (17) unterschreitet dabei die Totpunktstellung zwischen den beiden Lagerachsen (16), so daß die Federkraft die Bügelarme (13) in die in Fig. 3 gezeigt Stellung wieder aufspreizen läßt. Bei dieser Bewegung rastet auch die mit einer Anlauffläche versehene Sperrnase (23) wieder ein.

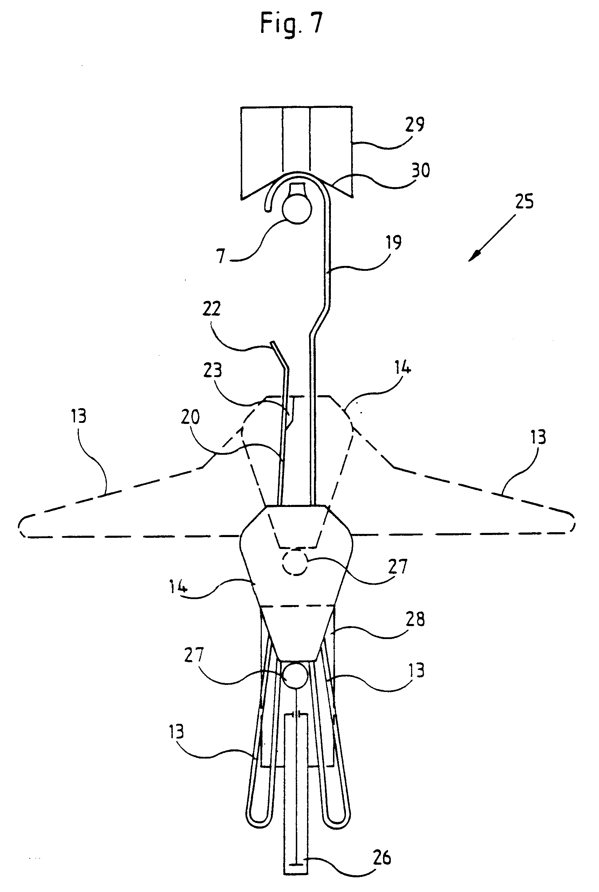

Wie Fig. 2 zeigt, ist im Bereich der Steigstrecke (10) der Fördervorrichtung (9) eine Abbügelvorrichtung (25) angeordnet. In Fig. 6 und 7 ist die Abbügelvorrichtung (25) sowie der Schlepphaken (11) in näheren Details dargestellt.

Der Schlepphaken (11) besitzt von der Seite gesehen eine spiralförmige Gestalt, beispielsweise in Form eines "e". Der Schlepphaken (11) weist einen Ansatz (34) auf, mit dem er drehschlüssig an den Gliedern der Fördervorrichtung (9), insbesondere den Kettengliedern des Kettentriebes befestigt ist. Der Ansatz (34) weist hierzu zwei Bohrungen auf, durch die er mit entsprechenden Bolzen, Schrauben oder dgl. an den Augen der Kettenglieder befestigt ist.

Der Schlepphaken (11) besitzt einen gerade oder leicht gebogenen, vorragenden Haltearm (36), der am Ende eine hochstehende Sicherungsnase (37) aufweist. Der Haltearm (36) geht nach einer ca. 90° Biegung in ein Auge (33) über. Der Schlepphaken (11) besitzt in diesem Bereich eine Transportnase (35), in der der Bügel (8) mit seinem Haken im Verlauf der horizontalen Transportstrecke und der Steigstrecke (10) hängt. Die Neigung der Transportstrecke ist auf die Winkel der Schlepphakenteile (36,35) abgestimmt und beträgt im gezeigten Ausführungsbeispiel ca. 30°.

Das Auge (33) ist fast geschlossen und weist nur eine schmale Zugangsöffnung auf. Hierdurch wird verhindert, daß der Bügelhaken unbeabsichtigt aus dem Auge (33) gleiten kann. Wie Fig. (6) näher verdeutlicht, fängt sich der Bügelhaken auch in der hinteren Biegung oder Ecke des Auges, wenn beim Einklappen der Bügelarme (13) auf der Arbeitsfläche (4) des Faltautomaten (2) der Bügel einen Sprung entlang der Arbeitsflächenneigung bzw. der Steigfläche (10) vollführt. Sollte durch widrige Umstände der Bügel tatsächlich frei werden, gleitet er durch die Biegung entlang des Haltearmes (36) und wird an der Sicherungsnase (37) aufgehalten.

Der Haltearm (36) ist so lang, daß die Haltenase (37) in Armrichtung einen größeren Abstand vom Rand der Transportnase (35) besitzt. Andererseits ist die Sicherungsnase (37) so kurz, daß sie quer zum Haltearm (36) einen zumindest der Bügelhakenbreite entsprechenden lichten Abstand zum Ende der Transportnase (35) hat.

Der Schlepphaken (11) ist am Ansatz (34) in einer solchen Ausrichtung befestigt, daß in Transportrichtung das Auge (33) vor dem Haltearm (36) liegt. Auf der horizontalen Transportstrecke ist der Schlepphaken (11) so ausgerichtet, daß die schmale Zugangsöffnung zum Auge (33) oben liegt. Auf der Steigstrecke (10) hingegen befindet sich die Zugangsöffnung bezogen auf die Vertikalenrichtung seitlich. An der Umkehrstelle am Ende der Steigstrecke (10) weist die Zugangsöffnung nach unten, so daß der Bügelhaken aus dem Auge (33) abgleiten und auf den in dieser Lage schräg nach unten geneigten Haltearm (36) bis zur Sicherungsnase (37) rutschen kann.

Fig. 6 verdeutlicht diese Schlepphakenposition, in der auch die Übergabe des leeren Bügels an die anschließende Förderstrecke (7) erfolgt. Die Förderstrecke (7) besteht hier aus einer einfachen Gleitstange, die aber auch als Förderschnecke oder in anderer Weise ausgebildet sein kann.

In diesem Bereich befindet sich die Abbügelvorrichtung (25), die für die klappbaren Bügel (8) zugleich auch als Aufstellvorrichtung funktioniert. Die Abbügelvorrichtung (25) besitzt einen Schubantrieb (26), hier in Form eines pneumatischen Zylinders, der in einer Schräglage angeordnet ist. Der Neigungswinkel liegt zwischen dem Winkel der Steigungsstrecke und der Vertikalen und beträgt in etwa die Hälfte des Neigungswinkels der Steigstrecke (10).

Im Bereich des Umlenkpunktes der Fördervorrichtung (9), d.h. am oberen Ende der Steigstrecke (10), ist ein Anschlagblock (29) angeordnet, der mit dem Schubantrieb (26) zusammenwirkt. Der Schubantrieb (26) besitzt einen vorstehenden Mitnehmer (27) und ein parallel zum Schubantrieb (26) ausgerichtetes Leitblech (28).

Zum Abbügeln nimmt der Schlepphaken (11) die in Fig. 6 dargestellte Position ein, in der sein Haltearm (36) schräg und in Längsachse der Förderstrecke (7) ausgerichtet ist. Die Stange (7) kann als zusätzliche Sicherungsmaßnahme an ihrem hakenseitigen Stirnende zwei längsgerichtete und voneinander distanzierte Fangstifte (31) besitzen, zwischen die der Haltearm (36) für die Übergabe tritt.

Zum Abbügeln fährt der Schubantrieb (26) aus und untergreift mit seinem Mitnehmer (27) das Gehäuse (14) des Bügels (8) und hebt diesen in Richtung auf den Anschlagblock (29) an. Das Leitblech (28) dient hierbei als Anschlag für die Bügelarme (13) und verhindert bereits während des Abgleitens des Bügelhakens (8) aus dem Auge (33) ein Durchpendeln. Auf diese Weise wird der gesamte Bügel (8) in der Schräglage des Schubantriebes (26) nach oben bewegt.

Der Anschlagblock 29) besitzt schräge Gleitflächen (30), die in zwei Richtungen geneigt, insbesondere pfeilförmig gestaltet sind. Wie Fig. 7 verdeutlicht, wird durch die Schwalbenschwanz- oder pfeilförmige Ausbildung in Richtung der Förderstrecke (7) der rundgebogene Bügelhaken am Anschlagblock (29) zentriert und zugleich mittig gegenüber der Förderstrecke (7) ausgerichtet. In Querrichtung gesehen sind die Gleitflächen (30) in Richtung zur Förderstrecke (7) nach oben geneigt. Diese Gleitflächen (30) übergreifen bzw. überdecken gemäß Fig. 6 den vorderen Bereich des Bügelarmes (36) und den benachbarten Endbereich der Förderstrecke (7). Der Fuß- oder Rastpunkt der Pfeilung befindet sich dabei in der Vertikalen gesehen über der Förderstrecke (7) und hinter deren Fangnase (32).

Zum Abbügeln bewegt der Schubantrieb (26) den Bügel (8) nach oben gegen die Gleitflächen (30), die den Bügelhaken zentrieren und in die Rastposition über der Förderstrecke (7) gleiten lassen. Der Schubantrieb (26) setzt seine Hubbewegung fort, wobei der Bügel (8) sich am Anschlagblock (29) abstützt mit der Folge, daß das Gehäuse (14) nach oben wandert und die Bügelarme (13) gespreizt sowie in dieser Lage durch die Sperrnase (23) gesichert werden. Fig. 7 zeigt diese Position in gestrichelten Linien. Der Gesamthub der Schubvorrichtung (26) ist damit so groß wie die Summe des Abhebeweges vom Schlepphaken (11) zur Rastposition am Anschlagblock (29) und des zum Aufklappen des Bügels (8) notwendigen Spreizhubes.

Wenn der Schubantrieb (26) den Mitnehmer (27) wieder zurückzieht, bleibt der Bügel (8) mit seinem Gehäuse (14) noch ein Stück in Anlage mit dem Leitblech (28), wodurch der Bügelhaken aus der Rastposition entlang der vertikalen Wand des Anschlagblockes (29) langsam nach unten auf die Förderstrecke (7) gleiten kann. Die Länge des Leitbleches (28) ist auf den Abstand des Anschlagblockes (29) bzw. der Radposition über der Förderstrecke (7) so abgestimmt, daß die Bügelarme (13) bzw. das Gehäuse (14) erst freigegeben werden, wenn der Bügelhaken auf der Förderstrecke (7) sicher hängt. Dann kann der Bügel (8) aus seiner Schräglage auspendeln und abgefördert werden.

Die Abgabe und Aufnahme der Bügel (8) von und auf der Fördervorrichtung (9) erfolgt im Takt des Faltautomaten (2). Während zum Anlegen eines Kleidungsstückes (3) ein Schlepphaken am Beginn der Steigstrecke (10) steht, wird zugleich oben vom nächsten ruhenden Schlepphaken gemäß Fig. 6 der leere Bügel (8) abgenommen. Nach dem Abbügeln wird der Schlepphaken (11) über den Umkehrpunkt weiterbewegt und wandert dabei durch den Anschlagblock (29), der hierzu in der Mitte eine Durchbrechung aufweist.

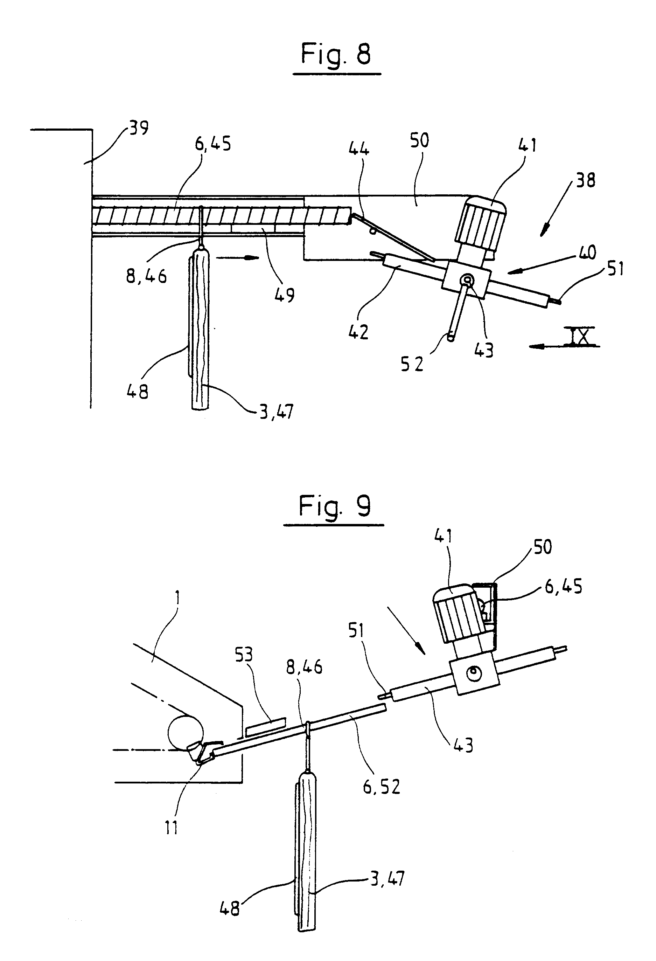

Zum gleichen Zeitpunkt findet an der Eingangsseite der Fördervorrichtung (9) die Übernahme und Zuführung eines neuen Bügels (8,46) mit einem Kleidungsstück (3,47) statt. Wie Fig. 8 und 9 verdeutlichen, wird hierzu ein Bügelumsetzer (38) eingesetzt, der die behängten Bügel von der vorgeschalteten Förderstrecke (6), hier einer Schnecke, abnimmt, sie um 90° dreht und auf eine Zuführstange (52) abgleiten und von dort zum aufnahmebereiten Schlepphaken (1) rutschen läßt. Die Kleidungsstück (3,47) kommen im gezeigten Ausführungsbeispiel aus einem Tunnel-Finisher (39). Die Knopfleiste (48) bzw. die Kragenöffnung weist hierbei entgegen der Transportrichtung. Nach Durchlaufen des Bügelumsetzers (38) ist das Kleidungsstück (3,47) gedreht und besitzt nun eine anlege- und faltgerechte Ausrichtung.

Der Bügelumsetzer (38) ist an einer Lagerplatte (50) befestigt, an der auch die Förderstrecke (6,45) gelagert ist. Der Bügelumsetzer (38) besteht aus einem drehbeweglichen Drehkreuz (40) mit vorzugsweise vier Armen (42,43) und einem Drehantrieb (41). Die Förderstrecke (6,45) und die Förderstrecke bzw. Zuführstange (6,52) sind im rechten Winkel zueinander ausgerichtet, den auch benachbarte Arme (42,43) zwischen sich einschließen. Das Drehkreuz (40) besitzt eine nach zwei Richtungen geneigte Drehachse. Hierdurch ist der aufnahmebereite Arm (42) zur oberhalb angeordneten Förderstrecke (6,45) schräg nach oben ausgerichtet (vgl. Fig. 8), während der abgabebereite Arm (43) schräg nach unten zur tiefer gelegenen Förderstrecke (6,52) geneigt ist (vgl. Fig. 9).

In Variation dazu kann das Drehkreuz (40) mit dem Antrieb (41) auch vertikal ausgerichtet sein, wobei die erwünschte Neigung durch einen Nocken bewirkt wird, der während der Drehung das Drehkreuz (40) mit seinen Armen (42,43) in die gewünschte Richtung kippt.

Von der Förderschnecke (6,45) gleiten die Bügel (8,46) über eine ortsfeste, in die rohrförmige Schnecke greifende Gleitschiene (44) auf den bereitstehenden Arm (42) ab. Die Gleitschiene (44) endet kurz vor dem Schaft des Drehkreuzes (40) und sorgt für ein sicheres Aufgleiten des Bügels (8) und eine definierte Lage am Armende. Die Schneckenbewegungen und damit die Überführung der Bügel (8,46) werden über einen Sensor (49) in Verbindung mit einer entsprechenden Maschinensteuerung überwacht und gesteuert.

Fig. 9 zeigt den Bügelumsetzer (38) aus der Sicht des Pfeiles IX gemäß Fig. 8. Nach der Aufnahme eines Bügels (8) dreht das Drehkreuz einmal um 90°, so daß der Arm in die Abgabeposition über der Zuführstange (52) kommt. Durch die geneigte Lage gleitet der Bügel (8,46) vom Arm (43) über einen stangenartigen Fortsatz (51), der die Lücke überbrückt, auf die Zuführstange (52). Hier sind ein Sensor (53) und Halteorgane (nicht dargestellt) vorgesehen, die in Verbindung mit einer entsprechenden Steuerung für ein zeit-und taktgerechtes Abgleiten der Bügel (8,46) von der Zuführstange in die bereitstehenden Schlepphaken (11) sorgen.

Die Arme (42,43) besitzen einen Durchmesser, der geringfügig kleiner als die Öffnungsweite der Bügelhaken ist. Der Bügel (8,46) kann sich hierdurch beim Umsetzen nicht verdrehen und verklemmen. An ihrem freien Ende weisen die Arme (42,43) in ihrem oberen Bereich den dünnen stangenartigen Fortsatz (51) auf.

### STÜCKLISTE

- 1: Übergabevorrichtung
- 2: Faltautomat
- 3: Bekleidungstück
- 4: Faltklappe, Arbeitsfläche
- 5: Niederhalter, Formschablone
- 6: Förderstrecke
- 7: Förderstrecke
- 8: Transportbügel
- 9: Kettentrieb, Fördervorrichtung
- 10: Steigstrecke
- 11: Schlepphaken, Mitnehmer
- 12: Sensor
- 13: Bügelarm
- 14: Gehäuse
- 15: Führungskanal
- 16: Lager
- 17: Kulisse
- 18: Fortsatz
- 19: Bügelhaken
- 20: Unterteil
- 21: Bolzen
- 22: Angleitschräge
- 23: Sperrnase
- 24: Vakuumvorrichtung
- 25: Abbügelvorrichtung, Aufstellvorrichtung
- 26: Schubantrieb, Zylinder
- 27: Mitnehmer
- 28: Leitblech
- 29: Anschlagblock
- 30: Gleitfläche
- 31: Fangstift
- 32: Fangnase
- 33: Auge
- 34: Ansatz
- 35: Transportnase
- 36: Haltearm
- 37: Sicherungsnase
- 38: Bügelumsetzer
- 39: Finisher
- 40: Drehkreuz
- 41: Antrieb, Motor
- 42: Arm
- 43: Arm
- 44: Gleitschiene
- 45: Förderstrecke, Förderschnecke
- 46: Bügel
- 47: Kleidungsstück
- 48: Knopfleiste
- 49: Sensor
- 50: Lagerplatte
- 51: stangenartiger Fortsatz, Gleitstange
- 52: Zuführstange
- 53: Sensor

## Patentansprüche

1. Verfahren zur automatischen Übergabe von Bekleidungsstücken an Faltautomaten, wobei die an einklappbaren, von einem Förderer abnehmbaren Transportbügeln hängenden und entlang einer Förderstrecke bewegten Bekleidungsstücke auf die geneigte Arbeitsfläche des Faltautomaten aufgelegt und dort festgehalten werden, wonach die Transportbügel eingeklappt, aus dem Bekleidungsstück gezogen und leer weiterbefördert werden, dadurch **gekennzeichnet**, daß die Transportbügel zum Herausziehen aus dem Bekleidungsstück in Richtung der Arbeitsflächenneigung bewegt werden.

2. Verfahren nach Anspruch 1, dadurch **gekennzeichnet**, daß das Bekleidungsstück durch steuerbaren Saugdruck auf der Arbeitsfläche festgehalten wird, wobei der Saugdruck beim Anziehen des Transportbügels niedriger als bei der anschließenden Längsfaltung ist.

3. Vorrichtung zur automatischen Übergabe von Bekleidungsstücken (3) gemäß dem Verfahren nach Anspruch 1 an Faltautomaten (2) mit einer geneigten Arbeitsfläche (4, bestehend aus einer Fördervorrichtung (9) zum Transport der an abnehmbaren Transportbügeln (8) hängenden Bekleidungsstücke (3), einer Vorrichtung zum Festhalten der aufgelegten Bekleidungsstücke (3) auf der Arbeitsfläche (4) und einer Entriegelungsvorrichtung zum Einklappen der Transportbügel (8), dadurch **gekennzeichnet**, daß die Fördervorrichtung (9) eine Steigstrecke (10) aufweist, die in Verlängerung und in der Neigung der Arbeitsfläche (4) des Faltautomaten (2) verläuft.

4. Vorrichtung nach Anspruch 3, dadurch **gekennzeichnet**, daß die Fördervorrichtung (9) als umlaufender und am Faltautomaten (2) angeordneter Kettentrieb mit mehreren Mitnehmern (11) für die Transportbügel (8) ausgebildet ist, an den beidseitig externe Förderstrecken (6,7) für die Transportbügel (8) anschließen.

5. Vorrichtung nach Anspruch 4, dadurch **gekennzeichnet**, daß die Fördervorrichtung (9) mehrere berührungslose Sensoren (12) zur Feststellung der Mitnehmerpositionen aufweist.

6. Vorrichtung nach Anspruch 5, dadurch **gekennzeichnet**, daß in der Arbeitsfläche (4) des Faltautomaten eine gesteuerte Vakuumvorrichtung (24) angeordnet ist.

7. Vorrichtung nach Anspruch 3 oder einem der folgenden, dadurch **gekennzeichnet**, daß der Transportbügel (8) zwei schwenk- und abklappbar gelagerte, im wesentlichen V-förmige Bügelarme (13) sowie einen Bügelhaken (19) und eine Sperrvorrichtung aufweist, wobei die Bügelarme (13) geschlossene Bügelspitzen besitzen und als Spreizfedern ausgebildet sind.

8. Vorrichtung nach Anspruch 7, dadurch **gekennzeichnet**, daß die Bügelarme (13) am oberen Ende in einem Gehäuse (14) schwenkbar gelagert (16) sind und am unteren Ende in einer mit dem Bügelhaken (19) ausziehbaren Kulisse (17) schwenkbar gelagert sind, wobei die Kulisse (17) zwischen den Lagern (16) bis in eine Stellung oberhalb von deren Achsen durchführbar ist.

9. Vorrichtung nach Anspruch 7 oder 8, dadurch **gekennzeichnet**, daß der Bügelhaken (19) ein U-förmig um die Kulisse (17) gebogenes, federndes Unterteil (20) aufweist, an dessen freiem Ende eine Angleitschräge (22) sowie eine mit dem Gehäuse (14) zusammenwirkende Sperrnase (23) angeordnet sind.

10. Vorrichtung nach Anspruch 3 oder einem der folgenden, dadurch **gekennzeichnet**, daß an der schrägen Steigstrecke (10) der Fördervorrichtung (9) eine Abbügelvorrichtung (25) mit einem Schubantrieb (26) angeordnet ist, der den Transportbügel (8) vom Schlepphaken (11) abhebt und auf eine anschließende Förderstrecke (7) gleiten läßt.

11. Vorrichtung nach Anspruch 10, dadurch **gekennzeichnet**, daß die Abbügelvorrichtung (25) einen oberhalb der Förderstrecke (7) angeordneten Anschlagblock (29) mit schrägen zentrierenden Gleitflächen (31) aufweist, die sich ein Stück über den Schlepphaken (11) und die Förderstrecke (7) erstrecken, wobei der Rastpunkt über der Förderstrecke (7) liegt.

12. Vorrichtung nach Anspruch 11, dadurch **gekennzeichnet**, daß der Anschlagblock (29) und die Förderstrecke (7) am Ende der Steigstrecke (10) angeordnet sind.

13. Vorrichtung nach Anspruch 10, 11 oder 12, dadurch **gekennzeichnet**, daß der Schubantrieb (26) schräg in einem Winkel zwischen der Neigung der Steigstrecke (10) und der Vertikalen angeordnet ist.

14. Vorrichtung nach Anspruch 13, dadurch **gekennzeichnet**, daß der Schubantrieb (26) einen Zylinder mit einem vorspringenden Mitnehmer (27) und einem dahinter angeordneten Leitblech (28) aufweist.

15. Vorrichtung nach Anspruch 13 oder 14, dadurch **gekennzeichnet**, daß der Hub des Schubantriebs (26) der Summe des Abhebeweges des Transportbügels (8) vom Schlepphaken (11) und des Spreizweges zum Aufklappen der Bügelarme (13) entspricht.

16. Vorrichtung nach Anspruch 1 oder einem der folgenden, dadurch **gekennzeichnet**, daß die Förderstrecke (7) am blockseitigen Ende eine Fangnase (32) und zwei längsgerichtete, den Schlepphaken (11) seitlich umfassende Fangstifte (31) aufweist.

17. Vorrichtung nach Anspruch 1 oder einem der folgenden, dadurch **gekennzeichnet**, daß die Schlepphaken (11) eine spiralförmige Gestalt aufweisen und drehschlüssig mit den Gliedern der Fördervorrichtung (9) verbunden sind.

18. Vorrichtung nach Anspruch 17, dadurch **gekennzeichnet**, daß die Schlepphaken (11) am einen Ende ein Auge (33) mit einer engen Zugangsöffnung und am anderen Ende einen vorstehenden Haltearm (36) mit einer Sicherungsnase (37) aufweisen.

19. Vorrichtung nach Anspruch 1 oder einem der folgenden, dadurch **gekennzeichnet**, daß zwischen der Fördervorrichtung (9) und der vorgeschalteten Förderstrecke (6) ein Bügelumsetzer (38) mit einem mehrarmigen, angetriebenen Drehkreuz (40) angeordnet ist.

20. Vorrichtung nach Anspruch 19, dadurch **gekennzeichnet**, daß die Fördervorrichtung (9) und die Förderstrecke (6) in einem Winkel zueinander angeordnet sind, der dem Winkel zwischen benachbarten Armen (42,43) des Drehkreuzes (40) entspricht.

21. Vorrichtung nach Anspruch 19 oder 20, dadurch **gekennzeichnet**, daß das Drehkreuz mit seinen Armen (42,43) schräg zur Fördervorrichtung (9) und zur Förderstrecke (6) ausgerichtet ist.

22. Vorrichtung nach Anspruch 19, 20 oder 21, dadurch **gekennzeichnet**, daß die Arme (42,43) des Drehkreuzes (40) einen Durchmesser besitzen, der der Öffnungsweite der Bügelhaken entspricht und am freien Ende eine dünneren stangenförmigen Fortsatz aufweisen.

23. Vorrichtung nach Anspruch 19 oder einem der folgenden, dadurch **gekennzeichnet**, daß die Förderstrecke (6) oberhalb des Drehkreuzes (40) angeordnet ist und eine abwärts geneigte sowie über den in Aufnahmeposition befindlichen Arm (42,43) reichende Gleitschiene (44) aufweist.

24. Vorrichtung nach Anspruch 19 oder einem der folgenden, dadurch **gekennzeichnet**, daß zwischen der Fördervorrichtung (9) und dem Drehkreuz (40) eine schräge Zuführstange (52) angeordnet ist, die bis unter den stangenförmigen Fortsatz (51) des in Übergabeposition befindlichen Armes (42,43) reicht.

## Claims

1. Method of automatically transferring garments to folding devices, the garments, hanging on foldable transport hangers which can be removed from a conveyor, and moved along a conveying section, being laid on the inclined work surface of the folding device and held firmly there, after which the transport hangers are folded, withdrawn from the garment and conveyed further empty, characterized in that the transport hangers are moved in the direction of the inclination of the work surface for withdrawal from the garment.

2. Method according to Claim 1, characterized in that the garment is held firmly on the work surface by controllable suction pressure, the suction pressure being lower when the transport hanger is pulled by suction than during the subsequent longitudinal folding.

3. Apparatus for automatically transferring garments (3), in accordance with the method of Claim 1, to folding devices (2) having an inclined work surface (4), comprising a conveying apparatus (9) for transporting the garments (3) hanging on removable transport hangers (8), an apparatus for holding the laid-on garments (3) firmly on the work surface (4), and an unlocking apparatus for folding the transport hangers (8), characterized in that the conveying apparatus (9) has an ascending section (10) which runs as an extension to and at the inclination of the work surface (4) of the folding device (2).

4. Apparatus according to Claim 3, characterized in that the conveying apparatus (9) is constructed as a circulating chain mechanism which is arranged on the folding device (2), has a plurality of entrainers (11) for the transport hangers (8), and is adjoined on both sides by external conveying sections (6, 7) for the transport hangers (8).

5. Apparatus according to Claim 4, characterized in that the conveying apparatus (9) has a plurality of contact-free sensors (12) for determining the entrainer positions.

6. Apparatus according to Claim 5, characterized in that a controlled vacuum apparatus (24) is arranged in the work surface (4) of the folding device.

7. Apparatus according to Claim 3 or one of the subsequent claims, characterized in that the transport hanger (8) has two substantially V-shaped hanger arms (13) which are mounted to be pivotal and downwardly foldable, as well as a hanger hook (19) and a blocking apparatus, the hanger arms (13) having closed hanger tips and being constructed as resilient spreading elements.

8. Apparatus according to Claim 7, characterized in that the hanger arms (13) are mounted (16) pivotally at the upper end in a housing (14) and are mounted pivotally at the lower end in a slide block (17) which can be withdrawn with the hanger hook (19), it being possible for the slide block (17) to be guided between the bearings (16) to a position above the axes thereof.

9. Apparatus according to Claim 7 or 8, characterized in that the hanger hook (19) has a resilient lower part (20) which is bent in a U shape around the slide block (17) and at the free end of which a sliding-on oblique portion (22) and a blocking nose (23) which cooperates with the housing (14) are arranged.

10. Apparatus according to Claim 3 or one of the subsequent claims, characterized in that there is arranged on the oblique ascending section (10) of the conveying apparatus (9) a hanger removal apparatus (25) having a push drive (26) which raises the transport hanger (8) away from the drag hook (11) and allows it to slide onto an adjoining conveying section (7).

11. Apparatus according to Claim 10, characterized in that the hanger removal apparatus (25) has, arranged above the conveying section (7), a stop block (29) having oblique centring slide surfaces (31) which extend somewhat over the drag hook (11) and the conveying section (7), the latching point lying above the conveying section (7).

12. Apparatus according to Claim 11, characterized in that the stop block (29) and the conveying section (7) are arranged at the end of the ascending section (10).

13. Apparatus according to Claim 10, 11, or 12, characterized in that the push drive (26) is arranged obliquely at an angle between the inclination of the ascending section (10) and the vertical.

14. Apparatus according to Claim 13, characterized in that the push drive (26) has a cylinder with a projecting entrainer (27) and arranged behind this a baffle plate (28).

15. Apparatus according to Claim 13 or 14, characterized in that the stroke of the push drive (26) corresponds to the total of the raising path of the transport hanger (8) away from the drag hook (11) and the spreading path for folding up the hanger arms (13).

16. Apparatus according to Claim 1 or one of the subsequent claims, characterized in that the conveying section (7) has at the block end a catching nose (32) and two catching pins (31) directed longitudinally and gripping the drag hook (11) laterally.

17. Apparatus according to Claim 1 or one of the subsequent claims, characterized in that the drag hooks (11) have a spiral shape and are connected to rotate with the members of the conveying apparatus (9).

18. Apparatus according to Claim 17, characterized in that the drag hooks (11) have at one end an eye (33) having a narrow access opening and have at the other end a projecting holding arm (36) having a securing nose (37).

19. Apparatus according to Claim 1 or one of the subsequent claims, characterized in that there is arranged between the conveying apparatus (9) and the upstream conveying section (6) a hanger converter (38) having a multi-arm driven rotary star (40).

20. Apparatus according to Claim 19, characterized in that the conveying apparatus (9) and the conveying section (6) are arranged at an angle to one another which corresponds to the angle between adjacent arms (42, 43) of the rotary star (40).

21. Apparatus according to Claim 19 or 20, characterized in that the rotary star is aligned by means of its arms (42, 43) obliquely with respect to the conveying apparatus (9) and the conveying section (6).

22. Apparatus according to Claim 19, 20 or 21, characterized in that the arms (42, 43) of the rotary star (40) have a diameter which corresponds to the opening width of the hanger hooks, and have at the free end a thinner rod-shaped extension.

23. Apparatus according to Claim 19 or one of the subsequent claims, characterized in that the conveying section (6) is arranged above the rotary star (40) and has a downwardly inclined slide rail (44) reaching above the arm (42, 43) in the receiving position.

24. Apparatus according to Claim 19 or one of the subsequent claims, characterized in that there is arranged between the conveying apparatus (9) and the rotary star (40) an oblique supply rod (52) which reaches below the rod-shaped extension (51) of the arm (42, 43) in the transfer position.

## Revendications

1. Procédé de transfert automatique de pièces de vêtements à un dispositif automatique de pliage, dans lequel les vêtements suspendus à des cintres de transport repliables, pouvant être retirés d'un convoyeur et déplacés le long d'une section de convoyage, sont déposés sur la surface de travail inclinée du dispositif automatique de pliage et y sont retenus, à la suite de quoi les cintres de transport sont repliés, sont retirés du vêtement et sont évacués à l'état vide, caractérisé par le fait que, pour leur retrait du vêtement, les cintres de transport sont déplacés dans la direction de l'inclinaison de la surface de travail.

2. Procédé suivant la revendication 1, caractérisé par le fait que le vêtement est maintenu fermement sur la surface de travail par une pression d'aspiration commandable, la pression d'aspiration étant plus faible lors du retrait du cintre de transport que ce qu'elle est lors du pliage longitudinal ultérieur.

3. Dispositif de transfert automatique de vêtements (3) conformément au procédé selon la revendication 1, dans un dispositif automatique de pliage (2) possédant une surface de travail inclinée (4), constitué par un dispositif convoyeur (9) servant à transporter les vêtements (3) suspendus à des cintres de transport amovibles (8), un dispositif pour maintenir les vêtements déposés (3) sur la surface de travail (4) et un dispositif de déverrouillage pour replier les cintres de transport (8), caractérisé par le fait que le dispositif de convoyage (9) possède une section montante (10), qui s'étend dans le prolongement et avec l'inclinaison de la surface de travail (4) du dispositif de pliage automatique (2).

4. Dispositif suivant la revendication 3, caractérisé par le fait que le dispositif de convoyage (9) est réalisé sous la forme d'un dispositif d'entraînement à chaîne sans fin, installé sur le dispositif de pliage automatique (2) et comportant, pour les cintres de transport (8), plusieurs éléments de convoyage (11) auxquels se raccordent, des deux côtés, des sections extérieures de convoyage (6,7) pour les cintres de transport (8).

5. Dispositif suivant la revendication 4, caractérisé par le fait que le dispositif de convoyage (9) comporte plusieurs capteurs (12) sans contact pour déterminer les positions des éléments de convoyage.

6. Dispositif suivant la revendication 5, caractérisé par le fait qu'un dispositif à dépression commandé (24) est disposé dans la surface de travail (4) du dispositif automatique de pliage.

7. Dispositif suivant la revendication 3 ou l'une des suivantes, caractérisé par le fait que le cintre de transport (8) possède deux bras essentiellement en forme de V (13), qui sont montés de manière à pouvoir pivoter et à être repliés, ainsi qu'un crochet (19) et un dispositif de blocage, les bras (13) du cintre de transport possédant des extrémités refermées et étant agencés sous la forme de ressorts écarteurs.

8. Dispositif suivant la revendication 7, caractérisé par le fait que les bras (13) du cintre de transport sont montés (16) de manière à pouvoir pivoter, au niveau de leur extrémité supérieure, dans un boitier (14) et sont montés de façon à pouvoir pivoter, au niveau de leur extrémité inférieure, dans une coulisse (17) que l'on peut faire ressortir au moyen du crochet (19) du cintre de transport, la coulisse (17) pouvant être formée entre les paliers (16) jusque dans une position située au-dessus des axes de ces derniers.

9. Dispositif suivant la revendication 7 ou 8, caractérisé par le fait que le crochet (19) de l'étrier possède une partie inférieure élastique (20), qui est repliée en forme de U (17) et à l'extrémité inférieure de laquelle sont disposés une rampe de glissement (22) ainsi qu'un ergot de blocage (23) qui coopère avec le boîtier (14).

10. Dispositif suivant la revendication 3 ou l'une des suivantes, caractérisé par le fait que sur la section oblique montante (10) du dispositif de convoyage (9) est disposé un dispositif de repassage (25) comportant un dispositif de poussée (26), qui soulève le cintre de transport (8) du crochet de remorquage (11) et le fait glisser sur une section de convoyage contiguë (7).

11. Dispositif suivant la revendication 10, caractérisé par le fait que le dispositif de repassage (25) possède un bloc de butée (29), qui est disposé au-dessus de la section de convoyage (7) et possède des surfaces de glissement obliques réalisant un centrage et qui s'étendent légèrement au-dessus du crochet de remorquage (11) et de la section de convoyage (7), le point d'encliquetage étant situé au-dessus de la section de convoyage (7).

12. Dispositif suivant la revendication 11, caractérisé par le fait que le bloc de butée (29) et la section de convoyage (7) sont disposés à l'extrémité de la section montante (10).

13. Dispositif suivant la revendication 10, 11 ou 12, caractérisé par le fait que le dispositif de convoyage (26) est disposé obliquement suivant un angle entre la partie inclinée de la section montante (10) et la verticale.

14. Dispositif suivant la revendication 13, caractérisé par le fait que le dispositif de poussée (26) comporte un vérin possédant un élément d'entraînement saillant (27) et une chicane (28) disposée derrière cet élément de convoyage.

15. Dispositif suivant la revendication 13 ou 14, caractérisé par le fait que la course du dispositif de poussée (26) correspond à la somme de la course de soulèvement du cintre de transport (8) à partir du crochet de remorquage (11), et de la course d'écartement pour le déploiement des bras (13) du cintre de transport.

16. Dispositif suivant la revendication 1 ou l'une des suivantes, caractérisé par le fait que la section de convoyage (7) possède, sur l'extrémité située du côté du bloc, un bec d'accrochage (32) et deux tiges longitudinales d'accrochage (31), qui entourent latéralement le crochet de remorquage (11).

17. Dispositif suivant la revendication 1 ou l'une des suivantes, caractérisé par le fait que les crochets de remorquage (11) possèdent une forme spiralée et sont raccordés, avec blocage en rotation, aux éléments du dispositif de convoyage (9).

18. Dispositif suivant la revendication 17, caractérisé par le fait que les crochets de remorquage (11) possèdent, à une extrémité, un oeillet (33) possédant une ouverture d'accès étroite et, à l'autre extrémité, un bras de retenue saillant (36) comportant un ergot de sécurité (37).

19. Dispositif suivant la revendication 1 ou l'une des suivantes, caractérisé par le fait qu'entre le dispositif de convoyage (9) et la section de convoyage (6) disposée en amont est agencé un dispositif (38) de déplacement de cintres de transport, qui comporte un tourniquet entraîné (40) à plusieurs bras.

20. Dispositif suivant la revendication 19, caractérisé par le fait que le dispositif de convoyage (9) et la section de convoyage (6) font entre eux un angle qui correspond à l'angle entre des bras voisins (42,43) du tourniquet (40).

21. Dispositif suivant la revendication 19 ou 20, caractérisé par le fait que les bras (42,43) du tourniquet sont orientés obliquement par rapport au dispositif de convoyage (9) et à la section de convoyage (6).

22. Dispositif suivant la revendication 19, 20 ou 21, caractérisé par le fait que les bras (42,43) du tourniquet (40) possèdent un diamètre, qui correspond à la largeur d'ouverture des crochets de cintres de transport, et possèdent, sur leur extrémité libre, un prolongement en forme de tige plus mince.

23. Dispositif suivant la revendication 19 ou l'une des suivantes, caractérisé par le fait que la section de convoyage (6) est disposée au-dessus du tourniquet (40) et possède une glissière (44) inclinée vers le bas et qui s'étend au-dessus du bras (42,43) situé dans la position de réception.

24. Dispositif suivant la revendication 9 ou l'une des suivantes, caractérisé par le fait qu'entre le dispositif de convoyage (9) et le tourniquet (40) est disposée une barre oblique d'amenée (52), qui s'étend jusqu'au-dessous le prolongement en forme de bord (51) du bras (42,43) situé dans la position de transfert.
